# EUROPEAN PATENT SPECIFICATION

(11) **EP 3 770 115 B1**
(45) Date of publication and mention of the grant of the patent: **27.11.2024**
(21) Application number: 19771464.5
(22) Date of filing: 22.03.2019
(51) Int. Cl.: C01B 33/32, C08L 9/06, C08L 9/00, C08K 3/36, C01B 33/193

(54) **METHOD FOR MAKING BIOMASS WHITE CARBON BLACK**
VERFAHREN ZUR HERSTELLUNG VON FÄLLUNGSKIESELSÄURE AUS BIOMASSE
PROCÉDÉ DE PRODUCTION DE SILICE DE PRÉCIPITATION À PARTIR DE BIOMASSE

(30) Priority: 22.03.2018 CN 201810242351
(43) Date of publication of application: 27.01.2021
(73) Proprietor: Fenghai (Panjin) Rice Biotechnology Co., Ltd., Panjin, Liaoning 124221 (CN)
(72) Inventor: LI, Chao, Panjin, Liaoning 124221 (CN); ZHANG, Guiyin, Panjin, Liaoning 124221 (CN); KUANG, Chong, Panjin, Liaoning 124221 (CN); DU, Pengju, Panjin, Liaoning 124221 (CN); BAO, Haixiang, Panjin, Liaoning 124221 (CN)
(74) Representative: Patentanwälte Ruff, Wilhelm, Beier, Dauster & Partner mbB
(86) International application number: PCT/CN2019/079153
(87) International publication number: WO 2019/179507

(56) References cited:
- WO-A1-2017/063901
- CN-A- 1 032 429
- CN-A- 1 039 000
- CN-A- 1 762 802
- CN-A- 105 080 480
- CN-A- 107 697 921
- CN-A- 108 483 455
- US-A1- 2017 015 807
- DATABASE WPI Week 201429, Derwent World Patents Index; AN 2014-D66279, XP002806058
- DATABASE WPI Week 201128, Derwent World Patents Index; AN 2011-A82154, XP002806066
- DATABASE WPI Week 200682, Derwent World Patents Index; AN 2006-798738, XP002806067
- DATABASE WPI Week 201447, Derwent World Patents Index; AN 2014-N42504, XP002806068

## Description

### Technical Field

This invention relates to a preparation method for biomass white carbon black, especially rice hull-derived white carbon black, and belongs to the field of chemical materials.

### Background technology

White carbon black is amorphous hydrated silica. Its research originated in Germany. It was initially prepared with silica sand as raw material by precipitation method. Since white carbon black has the characteristics of large specific surface area, porousness, high-temperature resistance, strong electrical insulation, good reinforcement and non-combustion, when it is used to replace carbon black to reinforce rubber products, it can get the same reinforcing effect as carbon black. Because of its white appearance, it is called "white carbon black". White carbon black is a very important chemical product due to its strong reinforcement, dispersibility and other properties. It is now widely used in many fields such as latex, rubber, plastics, coating, cosmetics, medicine, pesticide and food.

The preparation methods of white carbon black in the prior art include heat treatment method (e.g., gas phase method) and precipitation method (also known as liquid phase method). Among others, the precipitation method is a method currently having a relatively wide application range, and non-metallic minerals, industrial by-products, agricultural by-products (e.g., rice hull ash) and the like are respectively reported to be used as the starting materials for the preparation of white carbon black. In the study of the precipitation method, according to the different types of acidifiers, it can be divided into strong acid precipitation method, CO₂ precipitation method, organic acid precipitation method and the alkaline activator precipitation method. Compared with the heat treatment method, the precipitation method has the advantages of simple equipment and low cost, and white carbon black products with different properties and meeting different needs can be obtained by adding different surfactants. However, the precipitation method in the prior art usually has disadvantages such as complicated process, low product purity, and long preparation cycle. Moreover, for a long time in the prior art, the agricultural by-product derived, especially the rice hull-derived white carbon black (i.e., prepared with the rice hull ash obtained by burning rice hulls as raw materials) have many defects, e.g., its insufficient application performance, and difficulty in achieving the same or similar properties as the white carbon black derived from other minerals such as quartz sand, so that the application of the rice hull-derived white carbon black is impeded.

To solve these problems, many attempts have been made. For example, Chinese patent application 201410020643.2 attempts to remove metal impurities in rice hull ash raw materials and intermediate products through the washing operation with an aqueous solution of a chelating agent to increase the dissolution rate of silica in the rice hull ash, thereby improving the whiteness and the purity of the white carbon black. However, there is still a need to further develop a method for preparing a white carbon black that can effectively improve the above-mentioned shortcomings, reduce the amount of organic reagents as much as possible, or be more suitable for the large-scale production, and provide a white carbon black that is more suitable for improving the rubber properties of the biomass-derived white carbon black than the existing products.

Further, CN 103 468 668 A discloses a method for immobilization of lipase by a white carbon black carrier. CN 1 762 802 A discloses a method for preparing activated silica using rice husk ash as raw material.

US 2017/0015807 A1 discloses a process for preparing a precipitated silica, in which a silicate is reacted with an acidifying agent, so as to obtain a suspension of precipitated silica, said suspension of precipitated silica is tillered, so as to obtain a filter cake, said filter cake is subjected to a liquefaction operation, after the liquefaction operation, a drying step is performed, wherein at least one polycarboxylic acid is added to the filter cake, during or after the liquefaction operation.

### Summary of the Invention

The present invention provides a method for preparing a white carbon black, comprising the following steps:
d1) a substrate material containing an aqueous solution containing a silicate represented by a formula M₂O·nSiO₂ and an acid are contacted to give a slurry E;
d2) the slurry E obtained in the step d1) is subjected to a solid-liquid separation to give a solid-phase fraction, and the solid-phase fraction is dried to give a white carbon black product.

According to an embodiment of the preparation method, wherein:
in the step d1), the aqueous solution containing the silicate represented by the formula M₂O·nSiO₂ may be adjusted to a specific gravity of 1.000-1.280, for example 1.100-1.180, and then contacted with an acid;
Preferably, the contacting with the acid can be carried out by adding an inorganic acid or an aqueous solution thereof to adjust the pH value; for example, the pH value can be adjusted to 4.0 to less than 7.0, for example 4.5-6.5, e.g., 4.8-6.2; preferably, the velocity of adding the inorganic acid or an aqueous solution thereof can be 10-15 m³/h; preferably, the inorganic acid can comprise one or more of the acids such as sulfuric acid and hydrochloric acid, for example sulfuric acid; preferably, when an aqueous solution of an inorganic acid is used, its mass percentage concentration can be 5-10 wt%;
Preferably, the contacting can be carried out under the heating condition, for example, the curing can be carried out at 60-70°C; preferably, the treatment time can be 1-60 minutes, e.g., 5-15 minutes, for example 10 minutes; according to the present invention, the treatment time refers to a period from the beginning of the pH adjustment to the completion of the curing; preferably, after the pH adjustment, it is allowed to stand under the heating conditions (for example, 60-70°C) to complete the curing;
In the step d2), the solid-liquid separation can be performed by filtration; for example, the solid-phase fraction is a filter cake obtained from the filtration; preferably, the filter cake is vigorously mixed and stirred with water, and dried to obtain a white carbon black product;
Preferably, the filtration can be carried out for example with a plate-and-frame filter press; preferably, the drying can be the spray drying.

According to the present invention, the above aqueous solution, for example a water glass can be obtained by adjusting the ratio of the filtrate to the washing liquor. Or alternatively, the rice hull ash can be obtained by screening the rice hull ash of the existing technology. For example, the weight percentage content of the 2mm oversize in the rice hull ash is not higher than 2.3 wt%, for example, not higher than 2 wt%, e.g., 0.5-2 wt%. For example, the weight percentage content of the 2 mm oversize in the rice hull ash is 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%.

According to the present invention, the weight percentage content of the 2 mm oversize refers to the percentage by weight of the oversize obtained by passing the rice hull ash through a 2mm sieve to the total weight of the rice hull ash.

Preferably, the absorbance of an extract solution of the rice hull ash, at a detection wavelength of 300-330 nm, especially at a detection wavelength of 300 nm, may be 0.3-0.85, for example 0.4-0.8, e.g., 0.45-0.70.

As an example, the absorbance can be measured with a spectrophotometer. In one or more embodiments, the absorbance cuvette is a 1 cm cuvette.

According to the present invention, an extract solution of the rice hull ash can be obtained by contacting the rice hull ash with a solvent or a solution. As an example, it can be obtained by contacting the rice hull ash with a solvent or a solution under reflux and/or ultrasonic conditions.

In one or more embodiments, the solvent according to the present invention is selected from one or more of water and alcoholic solvents (e.g., ethanol and methanol), preferably water, ethanol or an aqueous ethanol solution. Among others, the mass percentage concentration of the aqueous ethanol solution may be 5%-95%, for example 20%-70%, e.g., 30%-60%, 30%, 40%, 50% or 60%.

In one or more embodiments, the solution according to the present invention is selected from an aqueous alkali solution or an alcohol solution. The alcohol may be for example methanol, ethanol or a mixture thereof; the alkali may be for example sodium hydroxide, potassium hydroxide or a mixture thereof.

In one or more embodiments, the mass-volume ratio (g:mL) of the rice hull ash according to the present invention to the solvent or the solution is 1:5-30, preferably 1:8-20, e.g., 1:10-15.

In one or more embodiments, the time for contacting the rice hull ash according to the present invention with the solvent or the solution may be 0.05-5 hours, for example 0.5-3 hours, e.g., 0.5-3 hours, e.g., 2-2.5 hours.

Preferably, the rice hull ash is contacted with water at 80-110°C to give an extract solution of the rice hull ash.

Preferably, the rice hull ash is contacted with water at 1-5 atmospheric pressures to give an extract solution of the rice hull ash.

In one or more embodiments, in the method according to the present invention, the time for contacting the rice hull ash with water is 0.05-0.1 hour.

In one or more embodiments, the method of the present invention may also comprise a filtration step, preferably filtering with a medium-speed filter paper and/or with an organic phase microporous filter membrane.

In one or more embodiments, the method of the present invention may also comprise a centrifugation step.

In one or more embodiments, the rotation speed of the centrifugation step according to the present invention is 6000-10000 rpm, and more preferably, the rotation speed for the centrifugation is 7000-9000 rpm.

In one or more embodiments, the time for the centrifugation step according to the present invention is 5-15 minutes, more preferably 8-12 minutes.

As an example, the absorbance of an aqueous extract solution of the rice hull ash may be less than 0.8, for example 0.3-0.8, e.g., 0.4-0.7.

According to the present invention, preferably, the rice hull ash has a 4-coumaric acid content of 60-175µg/g, preferably 80-150µg/g, more preferably 80-140µg/g. As an example, the content of the 4-coumaric acid can be 60µg/g, 70µg/g, 80µg/g, 90µg/g, 100µg/g, 110µg/g, 120µg/g, 130µg/g, 140µg/g, 150µg/g, 160µg/g, 170µg/g, 175µg/g.

Preferably, the relative content of 4-coumaric acid in the rice hull ash is determined by detecting the extract solution of the rice hull ash.

In one or more embodiments, the extract solution of the rice hull ash is obtained by the preparation method described above.

In one or more embodiments, in the method for preparing the extract solution of the rice hull ash, the solvent is ethanol having a mass percentage concentration of 30% (containing 30 wt% of ethanol).

In one or more embodiments, the rice hull ash is contacted with ethanol having a mass percentage concentration of 30% under a reflux condition to give an extract solution of the rice hull ash.

In one or more embodiments, the time for contacting the rice hull ash with the solvent is 1.25-1.75 hours, preferably 1.4-1.6 hours.

In one or more embodiments, the extract solution of the rice hull ash is subjected to centrifugation.

In one or more embodiments, the extract solution of the rice hull ash is obtained by filtering through an organic phase microporous filter membrane.

In one or more embodiments, the method further comprises drawing a standard curve of 4-coumaric acid reference substance, and further performing a linear regression on the absorbance vs. the concentration to obtain a standard curve equation.

In one or more embodiments, the method further comprises calculating the relative content of 4-coumaric acid in the rice hull ash according to the standard curve equation.

In one or more embodiments, the method further comprises comparing the relative content of 4-coumaric acid in the sample of the extract solution of the rice hull ash with the relative content of 4-coumaric acid in the qualified extract solution of the rice hull ash.

The present invention also provides the use of the rice hull ash in the preparation of water glass or soluble glass.

According to an embodiment of the present invention, there is also provided a method for preparing the rice hull ash, which comprises combusting a rice hull to obtain the rice hull ash, wherein the rice hull combustion is carried out under a controlled ratio of the oxygen-rich air volume to the oxygen-deficient air volume.

According to the present invention, the controlled ratio of the oxygen-rich air volume to the oxygen-deficient air volume refers to adjusting the ratio of the oxygen-rich air volume to the oxygen-deficient air volume, for example, the ratio of the oxygen-rich air volume to the oxygen-deficient air volume is greater than 5.1:1, for example, 5.5:1 or more, e.g., 6:1-10:1.

As an example, the rice hull can be conveyed under a positive pressure to a boiler combustion zone for combustion.

According to an embodiment of the present invention, the rice hull ash can be prepared by the following method:
b1) the rice hull is placed in the boiler combustion zone for combustion to obtain an initial rice hull ash;
b2) the initial rice hull ash obtained in the step b1) is subjected to sieving and impurity removal to give the rice hull ash.

According to the present invention, the rice hull usually enters the boiler combustion zone in a projecting attitude. After entering the boiler combustion zone, the rice hull gradually undergoes drying, cracking and gasification as the temperature rises. The combusted rice hull can gradually fall into the fire grate zone rotating at the bottom of the furnace under the action of gravity, and the temperature will gradually drop. The rice hull in the fire grate zone further undergoes a series of chemical changes such as decomposition, carbonization, and gasification at a relatively high temperature, and after the heat release, it is finally converted into the rice hull ash.

Generally speaking, the temperature in the boiler combustion zone (i.e., the furnace or the furnace zone) can be, for example, 600-900°C, e.g., 600-800°C, 600-700°C. The residence time of the rice hull in the furnace can be 10-60 minutes, e.g., 10-30 minutes, e.g., 15-20 minutes.

According to an embodiment of the present invention, the rice hull and the oxygen-rich air can be blown into the boiler combustion zone by a blower fan.

According to an embodiment of the present invention, in order to maintain the combustion state during the boiler operation, the gas introduced into the boiler is usually divided into two types, a primary air and a secondary air, wherein the primary air includes an air for blowing the fuel and a blown oxygen-deficient air; and the secondary air can include a preheated hot air.

As an example, the air flow that can be applied to the introduction into the boiler can be selected from an oxygen-rich air and/or an oxygen-deficient air.

According to the present invention, the total amount of the oxygen-rich air is the air in the boiler primary air for blowing the fuel and all the secondary air.

According to the present invention, the oxygen content in the oxygen-rich air may be 10 vol% or more, e.g., 15 vol% or more, for example, about 20 vol% - about 25 vol%, for example, about 21 vol%. As an example, the oxygen-rich air can be air.

According to the present invention, the oxygen content of the oxygen-deficient air is lower than that of the oxygen-rich air, for example, less than 10 vol%, e.g., less than 5 vol%, preferably 3-5 vol%, and its example may be a tail gas after the combustion of the rice hull.

According to the present invention, the oxygen-deficient air can undergo the processes of purification and heat exchange before being blown into the boiler. For example, the temperature of the oxygen-deficient air can be 100-200°C.

Preferably, the preparation method further comprises controlling the ratio of the blown-in amount of the oxygen-deficient air (m³) per unit time to the mass of the rice hull (t). For example, the ratio may be 600:1 or more, for example 600:1-1000:1, e.g., 650:1-900:1.

In the method for preparing the rice hull ash according to the present invention, the rice hull ash obtained by the combustion of the rice hull can be further sieved to remove impurities such as brown rice, stones and the like. For example, the sieving can be performed through a straight-line sieve of 1-5 mm (e.g., 2 mm).

Preferably, the sieved rice hull ash can also pass through a separator under a negative pressure conveying condition to separate organic substance impurities having different specific gravities, e.g. some rice grains and the like, through the inertia.

According to an embodiment of the present invention, the temperature of the fire grate zone can generally be 400-500°C. As an example, the fire grate may be in the shape of a chain crawler belt, and drive the rice hull and/or the rice hull ash falling on the fire grate to move at a certain speed and discharge off the boiler.

The invention also provides the rice hull ash obtained by the preparation method. Preferably, the carbon content of the rice hull ash product can be about 10-40 wt%, for example about 15-30 wt%, e.g., about 15-25 wt%.

According to the present invention, the method can be used to obtain the rice hull ash by using the existing rice hulls as raw materials. Or alternatively, the raw rice hull is also processed by sieving. For example, the weight percentage content of the rice hull oversize is 0.3-3.3%; for example, 1-3.3%, e.g., 1.5-2.5%.

According to the present invention, the weight percentage content of the rice hull oversize is detected by the following method:
1) a 1.5mm test sieve and a sieve bottom are put in place, a sample spoon is used to take out 50g of a rice hull sample and place it on the 1.5mm sieve, wherein the thickness of the rice hull is about 1 cm; the sieve lid is covered and the sieved is turned clockwise and counterclockwise for 60 seconds respectively;
2) the rice hull on the 1.5mm sieve is purged with a blower fan: an air speed of 20 m³/min is firstly used, wherein the distance between the air duct and the rice hull is about 40 cm, the purging time is 1 minute, and the remaining rice hull thickness is about 0.5cm, and then an air speed of 7 m³/min is used, wherein during the purging, the purged rice hull is checked until all the rice hulls are purged out of the sieve. The weight of the oversize is weighed as m (g), and the oversize content is calculated: the impurity content of the oversize in the rice hull (weight %) = m (g) × 100% ÷ 50g.

Preferably, the mass ratio of the oversize in the rice hull to the total organic impurities is 0.1-0.8: 1, for example 0.3-0.8: 1, e.g., 0.5-0.75: 1. The mass ratio can be obtained by calculating the ratio of the weight percentage content of the oversize to the weight percentage content of the total organic impurities. Among others, the weight percentage content of the total organic impurities refers to the total of the weight percentage contents of organic impurities in terms of starch and protein.

Preferably, the starch content in the rice hull of the present invention may be 0.2-3.0%, for example 0.4-2.3%; the protein content may be 2.0-2.8%, for example 2.1-2.4%.

According to the present invention, the rice hull can be prepared by the following method:
al) rice (e.g., wet rice) is sieved to remove impurities and then separated to obtain the rice hull;
a2) the rice hull obtained in step a1) is winnowed out.

As an example, after the rice in the step a1) is sieved to remove impurities, it can be further separated by a hulling machine to obtain the rice hull.

The rice hull obtained in the step a1) mainly contains organic impurities such as rice hull and full grains, broken brown rice, incomplete grains, shriveled grains and rice chaffs (also called grain sprout tips), rice hairs, and bran powder, and inorganic impurities such as sand dust, soil and rock, and metal debris.

According to the present invention, the method may comprise, in the step a2), controlling the weight percentage content of the oversize in the rice hull product and/or the mass ratio of the oversize to the total organic impurities. As an example, the weight percentage content of the oversize in the rice hull product, or the mass ratio of the oversize to the total organic impurities can be adjusted by the following methods:
1) the distance between the blower fan and the rice hull is set to 40 cm, the air speed of the blower fan is adjusted to purge the rice hull raw material with a thickness of 1 cm at an air speed of 20 m³/min for 1 minute, and the purged rice hull is collected and recorded as an undersize (B);
2) the air speed of the blower fan is adjusted to continue the purging at an air speed of 7m³/min until an oversize (A) free of the rice hull is obtained, and the purged rice hull is collected and recorded as an undersize (C);
3) the oversize (A) is mixed into the undersizes (B) and (C).

According to an embodiment of the present invention, the method further comprises in the step a2), sieving the obtained rice hull through a 40-mesh sieve, and then mixing the oversize and the undersize to control the weight percentage content of the oversize in the rice hull product, or the mass ratio of the oversize to the total organic impurities.

According to the present invention, the method for determining the starch can be GB/T 5009.9-2003 "Determination of Starch in Foods", and the method for determining the protein can be GB 50095-2010 "National Food Safety Standards Determination of Protein in Foods" First method: Kjeldahl method for nitrogen determination.

The inventors of the present invention found that during the process development, although the impurity content cannot significantly affect the performance parameters of the final white carbon black product, the white carbon black product can exhibit different performance changes in the application of rubber products. Specifically speaking, the inventors have found that the organic substances represented by coumaric acid are significantly present in the water glass in the preparation of white carbon black, if the content of the organic substances is controlled within the range of the present invention, the white carbon black product having performance parameters comparable to those of the mineral-derived white carbon black can be obtained, and at the same time, the white carbon black product can improve the application performance of the rubber product to which said white carbon black product is applied.

The inventors of the present invention have found that the content of the water-soluble impurity in the rice hull ash is associated with the application performance of the white carbon black product, in particular has a strong correlation to the rubber tensile strength, while the other parameters of the rubber almost has no correlation to the impurity content in the upstream rice hull ash raw material. The principle is not clear, but one presumption made by the inventors is as follows: in the premise of guaranteeing the stable parameters of the white carbon black and meeting the target requirements, the appropriate residual of the impurities in the white carbon black raw material improves the fat-solubility of the white carbon black and makes the carbon chains of the elastomeric polymers such as rubber more easily combine with the white carbon black, thereby improving the rubber tensile strength. Another presumption is as follows: the impurity is not directly adsorbed on the white carbon black, but during the synthesis process of the white carbon black, an appropriate impurity content affects the ζ potential of the solution, which changes the accumulation mode of the silica microparticles; although apparently the surface parameters such as BET and CTAB of the white carbon black have little change, however, on the microscopic level, it is easier for the carbon chains of the elastic polymer like the rubber and the white carbon black to be tightly entangled, leading to subtle changes in the tensile strength of the product. Of course, it is also possible that the above two theories coexist and produce the impact at the same time, or it is also possible that other theories exist and produce the impact together.

In the present invention, the contents of these organic substances can be obtained by controlling the rice hull raw material, the combustion process, the rice hull ash raw material, and the water glass, without additionally increasing the energy consumption and causing the waste of resources. At the same time, the emission of waste water and waste liquid is reduced. Thereby, extremely high economic and environmental benefits are produced.

### Beneficial effects

Without wishing to be bound by existing theories, the inventors have surprisingly found that controlling the parameters of the water glass within the range of the present invention can significantly improve the characteristics of the rice hull-derived white carbon black under the same other process parameters, and thereby significantly improve the mechanical properties of the rubber prepared by using the white carbon black as a filler, especially its mechanical strength such as tensile strength, and can reach the technical indicators of mineral-derived white carbon black. The water glass can be obtained by one of mixing the filtrate and the washing liquor, adjusting raw material parameters and preparation process parameters and the like, all of which can achieve the purpose of the present invention. Moreover, the method for preparing the white carbon black according to the present invention is simple and convenient, and is very suitable for the large-scale production. The above technical effects can be achieved by controlling the parameters of the water glass that are easy to be measured.

### Detailed description of the invention

Hereinafter, through the description of the examples of the present invention, the above-mentioned and other characteristics and advantages of the present invention are explained and described in more detail. It should be understood that the following examples are intended to exemplify the technical solutions of the present invention, but are not intended to limit the protection scope of the present invention defined by the claims and their equivalents.

Unless otherwise specified, the materials and reagents herein are all commercially available products, or can be prepared by those skilled in the art according to the prior art.

Instruments and reagents
Rice hull and rice hull ash, manufacturer: Yihai (Jiamusi) Grain and Oil Industry Co., Ltd.;
Caustic soda, concentration 32%, manufacturer: Heilongjiang Haohua Chemical Co., Ltd.;
Sulfuric acid, concentration 93%, manufacturer: Jilin Longyuan Qi Chemical Co., Ltd.;
Filter press model: XAZG224/1250-UK, manufacturer: Jianhua Group Filter Co., Ltd.;
Drying tower model: VG6500, manufacturer: Wuxi Spraying Dryer Factory.

Unless otherwise specified, the raw materials, substrates or reagents in the following examples are all commercially available products, or if appropriate, they can also be prepared by methods known in the art. The percentages are all mass percentages.

### Method for testing the absorbance of water glass

The water glass sample is drawn into a 1.0 cm cuvette, the absorbance is measured at 300nm wavelength with pure water as blank control.

### Method for measuring the content of coumaric acid in water glass

A sample of water glass is passed through a 0.45 µm organic phase microporous filter membrane and left for testing.

Preparation of reference substance solutions: 10.0 mg of 4-coumaric acid reference substance is accurately weighed, and dissolved by adding 30% ethanol and diluted to a constant volume of 50 mL. The resulting solution is then diluted with 30% ethanol to give reference substance solutions having the concentrations of approximately 10.0, 5.0, 2.5, 1.0, and 0.5 µg/ml, and left for test.

The plot of the standard curve: 30% ethanol is used as blank control, and the absorbance of the prepared reference substance solutions having different concentrations are measured at 300 nm, and a linear regression of the absorbance vs. the concentration is performed to obtain the standard curve equation.

The correction of curve slope: 10.0 mg of 4-coumaric acid reference substance is accurately weighed and dissolved by adding 30% NaOH solution and diluted to a constant volume of 50 mL. The resulting solution is then diluted with 30% NaOH solution to give a correction solution having the concentrations of approximately 2.5 µg/ml. The absorbance is measured at 300 nm and an absorbance coefficient is calculated according to the concentration and the absorbance. The absorption coefficient is used as the slope of the standard curve equation.

Sample measurement: With pure water as blank control, the absorbance of the test sample solution is measured at 300 nm, and the relative content of 4-coumaric acid in the sample is calculated according to the standard curve equation.

### Water-dissolution and coloration detection method for the absorbance of rice hull ash

The rice hull ash sample is mixed evenly and crushed. 20 grams of rice hull ash is weighed into a 500 ml beaker. 200 ml of distilled water is added. The mixture is boiled on an electric stove for 3-5 minutes. The beaker is removed and cooled. The upper aqueous solution is poured into a 100 ml small beaker with medium-speed filter paper to filter. The filtrate is sucked into a 1.0 cm cuvette, and the absorbance is measured at a wavelength of 300 nm with pure water as blank control.

### Method for detecting the content of 4-coumaric acid in the rice hull ash

Preparation of test solution: 5 g of the rice hull ash sample is accurately weighed, and 100ml of 30% ethanol is precisely added. The mixture is extracted under reflux 2 hours, and the extract is centrifuged (8000 rpm, 10 min). The supernatant is passed through a 0.45 µm organic phase microporous filter membrane and left for test.

Preparation of reference substance solutions: 10.0 mg of 4-coumaric acid reference substance is accurately weighed, and dissolved by adding 30% ethanol and diluted to a constant volume of 50 mL. The resulting solution is then diluted with 30% ethanol to give reference substance solutions having the concentrations of approximately 10.0, 5.0, 2.5, 1.0, and 0.5 µg/ml, and left for test.

The plot of the standard curve: 30% ethanol is used as blank control, and the absorbances of the prepared reference substance solutions having different concentrations are measured at 300 nm, and a linear regression of the absorbance vs. the concentration is performed to obtain the standard curve equation.

Sample measurement: with 30% ethanol as blank control, the absorbance of the test sample solution is measured at 300 nm, and the relative content of 4-coumaric acid in the sample is calculated according to the standard curve equation (µg/g).

### Method for detecting the 2mm oversize of the rice hull ash

A test sieve having a pore diameter of 2.0 mm and a sieve bottom are put in place, a sample spoon is used to take out 20g of a sample and place it on the 2.0 mm sieve, the sieve lid is covered and the sieved is turned clockwise and counterclockwise for 60 seconds respectively; then the rice hull ash on each sieve layer is weighed. Data are calculated.

### Rubber preparation and performance testing methods

The rubber mixing mode is an internal mixing in an internal mixer. For details, refer to Example 1 of Chinese Patent Application CN201210423251.1, and proceed according to the formula in Table 1 below.

**Table 1**

| Component | Part by weight |
|---|---|
| Solution polymerized styrene-butadiene | 144 |
| Cis-butadiene rubber | 36 |
| Zinc oxide | 4.8 |
| Stearic acid | 3.6 |
| White carbon black of the present invention | 100.8 |
| Silicone-69 (bis-[gamma-(triethoxysilyl)propyl]tetrasulfide) | 4.8 |
| CBS(N-cyclohexyl-2-benzothiazole sulphenamide) | 2.88 |
| DPG(diphenylguanidine) | 2.7 |
| 4020(N-(1,3-dimethyl)butyl-N'-phenyl-p-phenylenedia mine) | 3.6 |
| DTPD(N,N'-xylyl-p-phenylenediamine (mixture)) | 1.35 |
| sulfur | 2.7 |
| Total | 308.43 |

### Internal mixing process:

Mixing in the first stage: the rotor speed of an internal mixer was 45rpm, the ram pressure was 0.6MPa, firstly, the solution polymerized styrene-butadiene rubber and the cis-butadiene rubber were put into an internal mixing chamber of the internal mixer and mixed for 30 seconds, then the white carbon black and the silane coupling agent (silicone-69) were put into the internal mixing chamber and continuously mixed for 100 seconds, the temperature of the rubber mass reached 120 °C, the ram was lifted for 5 seconds, the rotor speed was adjusted to 30rpm, the rubber mass was mixed for 90 seconds under the ram pressure, the temperature of the rubber material was 150 °C, the rubber was discharged to give a first-stage rubber compound, and the first-stage rubber compound was cooled to the room temperature in the air.

Mixing in the second stage: the rotor speed of an internal mixer was 45rpm, the ram pressure was 0.6MPa, the first-stage rubber compound was put into an internal mixing chamber of the internal mixer, and zinc oxide, stearic acid, and antioxidants (4020 and DTPD) were added and mixed for 110 seconds under the ram pressure, the temperature of the rubber mass reached 130 °C, the ram was lifted for 5 seconds, the rotor speed was adjusted to 30rpm, the rubber mass was mixed for 90 seconds under the ram pressure, the temperature of the rubber material was 150 °C, the rubber was discharged to give a second-stage rubber compound, and the second-stage rubber compound was cooled to the room temperature in the air.

Mixing in the third stage: the rotor speed of an internal mixer was 35rpm, the ram pressure was 0.6MPa, the second-stage rubber compound, an accelerator (CBS and DPG) and sulfur were put into an internal mixing chamber of the internal mixer and mixed for 60 seconds, the ram was lifted for 10 seconds, then the rubber mass was mixed for 50 seconds under the ram pressure, the temperature of the rubber material was 85°C, the rubber was discharged to give a vulcanized rubber.

### Physical and mechanical properties (tensile strength) test:

Test conditions: The physical and mechanical properties of the vulcanized rubber are tested in accordance with the corresponding ASTM standards, using the XLL-250 universal material testing machine (product of LLOYD Instrument Company, UK) for testing.

### Preparation Examples 1-7

The following batches were respectively taken, rice hull ash (2000g), sodium hydroxide (904.3g) and water (9940g), and then added to the a high-pressure autoclave to proceed the reaction with a temperature rise. When the pressure rose to 3 kg, the timing was started. The reaction time was 4 hours. After the completion of the reaction, the pressure was released by cooling. The reaction slurry was filtered using a filter press, and the filtrate was collected and counted as concentrated water glass. The filter cake was washed with 60°C water, and the specific gravity of the washing liquor was measured during the washing process. When the specific gravity of the washing liquor was 1.030, the washing was finished, and the washing liquor was collected and counted as diluted water glass. The modulus of the water glass was 2.6.

**Table 2**

| Preparation Example | Absorbance of rice hull ash | Absorbance of concentrated water glass | Concentration of concentrated water glass | Absorbance of diluted water glass | Concentration of diluted water glass |
|---|---|---|---|---|---|
| Preparation Example 1 | 1.0 | 1.1 | 17wt% | 0.5 | 10wt% |
| Preparation Example 2 | 0.7 | 0.8 | 17wt% | 0.3 | 8wt% |
| Preparation Example 3 | 0.7 | 0.8 | 21wt% | 0.4 | 12wt% |
| Preparation Example 4 | 0.6 | 0.7 | 18wt% | 0.2 | 12wt% |
| Preparation Example 5 | 0.3 | 0.4 | 18wt% | 0.2 | 10wt% |
| Preparation Example 6 | 0.8 | 0.9 | 14wt% | 0.2 | 5wt% |
| Preparation Example 7 | 0.5 | 0.6 | 12wt% | 0.3 | 3wt% |

### Examples 1-9 Preparation of white carbon black (Method 2)

According to the proportions in Table 3 below, the concentrated water glass and the diluted water glass of the above preparation examples were respectively taken, and thoroughly mixed to obtain the water glass mother liquor (modulus 2.6). The concentration and the absorbance of the prepared water glass mother liquor were recorded in Table 3 below.

### Initial stage:

Into the reactor equipped with an agitator and a steam heating device were introduced:
5700g of the water glass mother liquor (modulus 2.6), 2335g of an aqueous sodium sulfate solution (having a Na₂SO₄ concentration of 3.8 %), and 398g of soft water were mixed and used as substrate material. The substrate material had a SiO₂ concentration of 76g/L and a Na⁺ concentration of 1.09mol/L, and was heated to the temperature of 79°C.

### Acidification stage

An acid pump was turned on. A dilute sulfuric acid (specific gravity 1.050) was added into the reactor at a flow rate of 92.4 g/minutes. In the acidification stage, the pH was checked once every 5 minutes, and the turbidity of the reaction system was detected, so that the turbidity of the reaction system reached 60FAU at 23 minutes. The flow rate was kept until the pH=8. The total amount of the acid used in this stage was 4623g. The time for adding the acid is 50 minutes, during which when the turbidity reached 4000FAU, the temperature rise began and proceeded at a rate of 1 °C/minutes to 94 °C. During a total of 15 minutes of the temperature rise procedure, the temperature was raised by 15°C. The temperature was maintained at 94°C until the end of the final reaction. An acidified water glass was obtained.

### Simultaneous feeding stage

The simultaneous feeding process was started. The above-mentioned water glass mother liquor (modulus 2.6) was added at a flow rate of 68.8g/min. The flow rate of dilute sulfuric acid was 64 g/min. The molar ratio of sulfuric acid to water glass was 1.055. The pH detection was carried out and the acid flow rate was adjusted so as to keep the pH of the slurry was stable at 8 ± 0.05. At this stage, the total addition amount of water glass and acid was 3984 g.

### Post-treatment stage

This stage was a pH-dropping stage, in which a dilute sulfuric acid was introduced to reduce the pH to 4.5.

After curing for 10 minutes, the reaction slurry was filtered with a plate filter press and washed with soft water to obtain a filter cake of white carbon black (water content = 81%). A colloid mill was used to change the filter cake from the solid to a liquid slurry. The pH value of the slurry was adjusted to 6.

A spray drying tower was used for drying to produce a finished product of white carbon black.

**Table 3**

| Method 2 | Concentrated water glass sample | Concentrated water glass amount | Dilute water glass sample | Dilute water glass amount | Water amount | Absorbance of water glass mother liquor | Concentration of water glass mother liquor | 4-coumaric acid content (µg/mL) |
|---|---|---|---|---|---|---|---|---|
| Example 1 | null | null | Preparation Example 5 | 100% | null | 0.2 | 12% | 3.4 |
| Example 2 | Preparation Example 3 | 20% | Preparation Example 4 | 80% | null | 0.32 | 14% | 5.3 |
| Example 3 | Preparation Example 4 | 30% | Preparation Example 2 | 70% | null | 0.42 | 11% | 6.9 |
| Example 4 | Preparation Example 3 | 60% | null | null | 40% | 0.48 | 13% | 8.1 |
| Example 5 | Preparation Example 2 | 70% | Preparation Example 6 | 30% | null | 0.62 | 13% | 10.3 |
| Example 6 | Preparation Example 1 | 70% | Preparation Example 6 | 30% | null | 0.83 | 13% | 13.8 |
| Example 7 | Preparation Example 1 | 60% | Preparation Example 6 | 40% | null | 0.74 | 12% | 12.3 |
| Example 8 | Preparation Example 1 | 80% | null | null | 20% | 0.88 | 14% | 14.7 |
| Example 9 | Preparation Example 1 | 80% | Preparation Example 7 | 20% | null | 0.94 | 14% | 157 |

### Examples 10-18 Preparation of white carbon black (Method 1)

According to the proportions in Table 4 below, the concentrated water glass and the diluted water glass of the above preparation examples were respectively taken, and thoroughly mixed to obtain the water glass mother liquor (modulus 2.6). The concentration and the absorbance of the prepared water glass mother liquor were recorded in Table 4 below.

### Initial stage:

Into the reactor equipped with an agitator and a steam heating device were introduced:
300.5g of the water glass mother liquor (modulus 2.6, specific gravity 1.140), the substrate material having a Na₂O concentration of 2.66 g/L, and 4720 g of soft water, heated to a temperature of 75°C.

### Acidification stage

The temperature was maintained at 75°C, and the acidification stage was started. A dilute sulfuric acid (specific gravity 1.050) was added at a flow rate of 71 g/minutes. The acidification was carried out until the pH = 8.72. The total amount of the acid used in this stage was 236g.

### Simultaneous feeding stage

The simultaneous feeding stage was started, and the temperature was maintained at 75°C. The water glass pump was turned on and the water glass was added at 85g/min. Dilute sulfuric acid was added at a flow rate of 70.5g/min. The molar ratio of sulfuric acid to water glass was controlled to 0.92. The turbidity reached 30FAU within 11 minutes, and the pH was detected at a frequency of 1 time/min. The flow rate of dilute sulfuric acid was adjusted to keep the pH was stable at 8.7±0.02. The temperature rise period began at 30 minutes after the starting of the simultaneous feeding. When the turbidity reached 4000FAU, the temperature rise proceeded at a rate of 1 °C/minutes. At 5 minutes, the temperature reached 80°C. The temperature was kept at 80°C until the final reaction was completed. The feeding ratio was 15.8. Wherein, the feeding ratio was the mass ratio of the aqueous water glass solution added during the simultaneous feeding stage to the aqueous water glass solution added to the substrate material in the initial stage.

### Post-treatment stage

During the pH-dropping stage, a dilute sulfuric acid was introduced at 54 g/min to reduce the pH to 4.7.

The curing time was 10 minutes, and the total of the reaction time was 83.33 minutes.

The cured slurry was filtered with a plate filter press and washed with soft water to obtain a filter cake of white carbon black (water content = 81%). A colloid mill was used to change the filter cake from the solid to a liquid slurry. The pH value of the slurry was adjusted to 5.8-6. Then, a spray drying tower was used for drying to produce a finished product of white carbon black.

**Table 4**

| Method 1 | Concentrated water glass sample | Concentrated water glass amount | Dilute water glass sample | Dilute water glass amount | Water amount | Absorbance of water glass mother liquor | Concentration of water glass mother liquor | 4-coumaric acid content (µg/mL) |
|---|---|---|---|---|---|---|---|---|
| Example 10 | | | Preparation Example 5 | 100% | | 0.2 | 12% | 3.4 |
| Example 11 | Preparation Example 3 | 20% | Preparation Example 4 | 80% | | 0.32 | 14% | 5.3 |
| Example 12 | Preparation Example 4 | 30% | Preparation Example 2 | 70% | | 0.42 | 11% | 6.9 |
| Example 13 | Preparation Example 3 | 60% | | | 40% | 0.48 | 13% | 8.1 |
| Example 14 | Preparation Example 2 | 70% | Preparation Example 6 | 30% | | 0.62 | 13% | 10.3 |
| Example 15 | Preparation Example 1 | 70% | Preparation Example 6 | 30% | | 0.83 | 13% | 13.8 |
| Example 16 | Preparation Example 1 | 60% | Preparation Example 6 | 40% | | 0.74 | 12% | 12.3 |
| Example 17 | Preparation Example 1 | 80% | | | 20% | 0.88 | 14% | 14.7 |
| Example 18 | Preparation Example 1 | 80% | Preparation Example 7 | 20% | | 0.94 | 14% | 15.7 |

### Application Examples

According to the method of the present invention, the white carbon black products obtained in the above examples were used to prepare the rubber, and the results were shown in Table 5 and Table 6 below.

**Table 5**

| Method 2 | BET | CTAB | Water | pH | Sodium sulfate | Tensile strength of rubber |
|---|---|---|---|---|---|---|
| Example 1 | 148 | 152 | 6.0 | 6.5 | 1.0 | 15.4 |
| Example 2 | 155 | 161 | 5.4 | 6.8 | 1.2 | 16.7 |
| Example 3 | 166 | 155 | 6.5 | 6.9 | 0.8 | 17.1 |
| Example 4 | 160 | 166 | 4.8 | 6.6 | 1.1 | 17.9 |
| Example 5 | 170 | 171 | 5.8 | 6.2 | 0.5 | 18.1 |
| Example 6 | 165 | 168 | 7.2 | 6.7 | 0.9 | 17.3 |
| Example 7 | 158 | 166 | 6.7 | 6.8 | 0.4 | 16.3 |
| Example 8 | 162 | 154 | 7.0 | 6.6 | 0.7 | 16.1 |
| Example 9 | 144 | 149 | 4.5 | 7.0 | 1.5 | 14.6 |

**Table 6**

| Method 1 | BET | CTAB | Water | pH | Sodium sulfate | Tensile strength of rubber |
|---|---|---|---|---|---|---|
| Example 10 | 190 | 192 | 5.2 | 6.4 | 0.7 | 16.9 |
| Example 11 | 198 | 210 | 6.5 | 6.2 | 1.5 | 17.6 |
| Example 12 | 200 | 197 | 6.8 | 6.1 | 1.2 | 17.9 |
| Example 13 | 197 | 210 | 6.6 | 6.7 | 1.4 | 18.7 |
| Example 14 | 204 | 195 | 7.1 | 6.5 | 1.1 | 19.2 |
| Example 15 | 205 | 200 | 6.7 | 6.9 | 1.0 | 18.9 |
| Example 16 | 192 | 190 | 7.2 | 6.8 | 0.8 | 17.3 |
| Example 17 | 199 | 208 | 6.8 | 6.8 | 1.2 | 17.1 |
| Example 18 | 195 | 182 | 7.0 | 6.6 | 1.4 | 15.8 |

It can be known from the above test results that the white carbon black obtained by the method of the present invention had comparable physical and mechanical properties to the white carbon black derived from minerals. By controlling the parameters of water glass within the scope of the present invention, a white carbon black product that can improve the tensile strength of rubber can be obtained.

### Preparation Examples 19-31 Preparation of rice hull

Rice hulls were obtained by cleaning and hulling of rough rice, and the rice hulls were subjected to a winnowing step to obtain oversize (A), undersize (B) and undersize (C), the specific winnowing step was as follows:
1) the distance between the blower fan and the rice hull was set to 40 cm, the air speed of the blower fan was adjusted to purge the rice hull raw material with a thickness of 1 cm at an air speed of 20 m³/min for 1 minute, and the purged rice hull was collected and recorded as an undersize (B);
2) the air speed of the blower fan was adjusted to continue the purging at an air speed of 7m³/min until an oversize (A) free of the rice hull was obtained, and the purged rice hull was collected and recorded as an undersize (C);
3) According to the oversize content ratio described in Table 7 below, the oversize (A) was mixed into the undersizes (B) and (C), and the starch and protein contents in the resulting mixture were detected. The contents of the rice hull samples were summarized in Table 7 below.

**Table 7**

| Preparation Example | Oversize (A) | Undersize (C) | Undersize (B) | Rice hull oversize content (wt%) | Starch content (wt%) | Protein content (wt%) | Oversize/Total organic impurities |
|---|---|---|---|---|---|---|---|
| Preparation Example 19 | 4.2 | 10.2 | 85.6 | 4.2 | 2.19 | 2.33 | 0.93 |
| Preparation Example 20 | 3.56 | 13.92 | 82.52 | 3.56 | 2.12 | 2.31 | 0.80 |
| Preparation Example 21 | 3.3 | 14.6 | 82.1 | 3.30 | 2.05 | 2.25 | 0.77 |
| Preparation Example 22 | 2.1 | 6.6 | 91.3 | 2.10 | 1.17 | 2.22 | 0.62 |
| Preparation Example 23 | 1.9 | 8.6 | 89.5 | 1.90 | 1.19 | 2.23 | 0.56 |
| Preparation Example 24 | 1.6 | 26.4 | 72 | 1.60 | 1.96 | 2.39 | 0.37 |
| Preparation Example 25 | 1.1 | 16 | 82.9 | 1.10 | 1.24 | 2.12 | 0.33 |
| Preparation Example 26 | 1.3 | 13.4 | 85.3 | 1.30 | 1.19 | 2.32 | 0.37 |
| Preparation Example 27 | 0.3 | 13.2 | 86.5 | 0.30 | 0.78 | 2.26 | 0.10 |
| Preparation Example 28 | 0.2 | 7.8 | 92 | 0.20 | 0.47 | 2.25 | 0.07 |
| Preparation Example 29 | 0.4 | 37.8 | 61.8 | 0.4 | 2.05 | 2.19 | 0.09 |
| Preparation Example 30 | 1.5 | 38 | 60.5 | 1.5 | 2.5 | 2.23 | 0.32 |
| Preparation Example 31 | 3 | 6 | 91 | 3 | 1.5 | 2.21 | 0.81 |

### Examples 19-31 Preparation of white carbon black (Method 2)

1) Preparation of rice hull ash: Using the existing technology, the above-mentioned rice hull ash samples were sent to the boiler furnace for combustion at a rate of 3 tons/hour under a positive pressure. The furnace combustion temperature was 800°C, and the fire grate rotation speed was adjusted to control the residence time of the rice hull in the furnace to 30 minutes, and the rice hull ash discharged from the tail of the fire grate was collected as raw material.
2) Impurity removal from rice hull ash: the rice hull ash raw material obtained in the step 1) was sieved through a 2mm straight-line sieve to remove impurities such as hulled rice and stones, and the sieved rice hull ash was passed through an inertial separator to remove organic impurities such as rice grains in the rice hull ash, and collect the obtained rice hull ash.
3) Preparation of water glass: rice hull ash (2000g) obtained in the step 2), sodium hydroxide (904.3g) and water (9940g) were respectively weighed, and then added to the a high-pressure autoclave to proceed the reaction with a temperature rise. When the pressure rose to 3 kg, the timing was started. The reaction time was 4 hours. After the completion of the reaction, the pressure was released by cooling. The reaction slurry was filtered using a filter press. The filter cake was washed with 60°C water, and the specific gravity of the washing liquor was measured during the washing process. When the specific gravity of the washing liquor was 1.030, the washing was finished. The filtrate was collected and counted as concentrated water glass, and the washing liquor was collected and counted as diluted water glass.
4) the concentrated water glass and the diluted water glass obtained in the step 3) were added to a blending tank according to the proportion, and the prepared aqueous water glass solution had a specific gravity of 1.140 and was left for use.
5) Initial stage:
   Into the reactor equipped with an agitator and a steam heating device were introduced:
   5700g of the aqueous water glass solution (modulus 2.6), 2335g of an aqueous sodium sulfate solution (having a Na₂SO₄ concentration of 3.8 %), and 398g of soft water, wherein the substrate material had a SiO₂ concentration of 76g/L and a Na⁺ concentration of 1.09mol/L, and was heated to the temperature of 79°C.

### Acidification stage

An acid pump was turned on. A dilute sulfuric acid (specific gravity 1.050) was added into the reactor at a flow rate of 92.4 g/minutes. In the acidification stage, the pH was checked once every 5 minutes, and the turbidity of the reaction system was detected, so that the turbidity of the reaction system reached 60FAU at 23 minutes. The flow rate was kept until the pH=8. The total amount of the acid used in this stage was 4623g. The time for adding the acid is 50 minutes, during which when the turbidity reached 4000FAU, the temperature rise began and proceeded at a rate of 1°C/minutes to 94 °C. During a total of 15 minutes of the temperature rise procedure, the temperature was raised by 15°C. The temperature was maintained at 94°C until the end of the final reaction.

### Simultaneous feeding stage

The simultaneous feeding process was started. The water glass water solution (modulus 2.6) was added at a flow rate of 68.8g/min. The flow rate of dilute sulfuric acid was 64g/min. The molar ratio of sulfuric acid to water glass was 1.055. The pH detection was carried out and the acid flow rate was adjusted so as to keep the pH of the slurry was stable at 8± 0.05. At this stage, the total addition amount of water glass and acid was 3984 g.

### Post-treatment stage

In the pH-dropping stage, a dilute sulfuric acid was introduced to reduce the pH to 4.5.

After curing for 10 minutes, the reaction slurry was filtered with a plate filter press and washed with soft water to obtain a filter cake of white carbon black (water content = 81%). A colloid mill was used to change the filter cake from the solid to a liquid slurry. The pH value of the slurry was adjusted to 6. A spray drying tower was used for drying to produce a finished product of white carbon black. The performance test results were as follows.

**Table 8**

| White carbon black | Rice hull sample | Absorbance of water glass | Content of coumaric acid in water glass | Tensile strength of rubber (MPa) |
|---|---|---|---|---|
| Example 19 | Preparation Example 19 | 1.45 | 24.17 | 9.80 |
| Example 20 | Preparation Example 20 | 0.95 | 15.83 | 15.60 |
| Example 21 | Preparation Example 21 | 0.89 | 14.83 | 16.30 |
| Example 22 | Preparation Example 22 | 0.67 | 11.17 | 18.60 |
| Example 23 | Preparation Example 23 | 0.65 | 10.83 | 18.40 |
| Example 24 | Preparation Example 24 | 0.52 | 8.67 | 17.50 |
| Example 25 | Preparation Example 25 | 0.45 | 7.50 | 16.90 |
| Example 26 | Preparation Example 26 | 0.39 | 6.50 | 16.50 |
| Example 27 | Preparation Example 27 | 0.33 | 5.50 | 16.10 |
| Example 28 | Preparation Example 28 | 0.21 | 3.50 | 15.90 |
| Example 29 | Preparation Example 29 | 0.26 | 4.33 | 15.70 |
| Example 30 | Preparation Example 30 | 0.55 | 9.17 | 17.30 |
| Example 31 | Preparation Example 31 | 0.93 | 15.50 | 15.20 |

### Preparation Examples 32-37 Preparation of rice hull ash

1) Preparation of rice hull ash: the same batch rice hulls were sent to the boiler furnace for combustion at a rate indicated in Table 9 under a positive pressure. According to the parameters in Table 9, the flow rates of the oxygen-rich air (air) and the oxygen-deficient air at the furnace bottom were controlled for combustion. The furnace combustion temperature was 800°C, and the fire grate rotation speed was adjusted to control the residence time of the rice hull in the furnace to 15 minutes, and the rice hull ash discharged from the tail of the fire grate was collected as raw material.
2) Impurity removal from rice hull ash: the rice hull ash raw material obtained in the step 1) was sieved through a 2 mm straight-line sieve and an inertial separator to remove impurities and collect the obtained rice hull ash samples for use.

**Table 9**

| | Oxygen-de ficient air (m³/h) | Rice hull amount (t/h) | Total oxygen-ric h air (air)(m³/h) | Primary oxygen-ric hair | Secondary air | Carbon content | Total oxygen-ric h air/oxygen-deficient air (v:v) | Oxygen-de ficient air/rice hull (m³/t) |
|---|---|---|---|---|---|---|---|---|
| Preparation Example 32 | 1716 | 1.92 | 12957 | 667 | 12290 | 10.5 | 7.6 | 775.9 |
| Preparation Example 33 | 1986 | 3 | 14989 | 662 | 14327 | 12.9 | 7.5 | 893.8 |
| Preparation Example 34 | 2978 | 5.08 | 18339 | 993 | 17346 | 12.3 | 6.2 | 662.0 |
| Preparation Example 35 | 2449 | 5.23 | 19487 | 816 | 18671 | 11.2 | 8.0 | 586.2 |
| Preparation Example 36 | 2250 | 2.9 | 11528 | 750 | 10778 | 12.2 | 5.1 | 468.3 |
| Preparation Example 37 | 2382 | 4.07 | 15334 | 265 | 15069 | 11.8 | 6.4 | 585.3 |

### Examples 32-37 Preparation of white carbon black (Method 2)

1) Preparation of water glass: each of rice hull ash samples (2000g) obtained in the above Preparation Examples, sodium hydroxide (904.3g) and water (9940g) were respectively weighed, and then added to the a high-pressure autoclave to proceed the reaction with a temperature rise. When the pressure rose to 3 kg, the timing was started. The reaction time was 4 hours. After the completion of the reaction, the pressure was released by cooling. The reaction slurry was filtered using a filter press. The filter cake was washed with 60°C water, and the specific gravity of the washing liquor was measured during the washing process. When the specific gravity of the washing liquor was 1.030, the washing was finished. The filtrate was collected and counted as concentrated water glass, and the washing liquor was collected and counted as diluted water glass.
2) the concentrated water glass and the diluted water glass obtained in the step 1) were mixed to give a water glass raw material having a specific gravity of 1.140 for use.
3) Initial stage:
   Into the reactor equipped with an agitator and a steam heating device were introduced:
   5700g of the aqueous water glass solution (modulus 2.6), 2335g of an aqueous sodium sulfate solution (having a Na₂SO₄ concentration of 3.8 %), and 398g of soft water, wherein the substrate material had a SiO₂ concentration of 76g/L and a Na⁺ concentration of 1.09mol/L, and was heated to the temperature of 79°C.

### Acidification stage

An acid pump was turned on. A dilute sulfuric acid (specific gravity 1.050) was added into the reactor at a flow rate of 92.4 g/minutes. In the acidification stage, the pH was checked once every 5 minutes, and the turbidity of the reaction system was detected, so that the turbidity of the reaction system reached 60FAU at 23 minutes. The flow rate was kept until the pH=8. The total amount of the acid used in this stage was 4623g. The time for adding the acid is 50 minutes, during which when the turbidity reached 4000FAU, the temperature rise began and proceeded at a rate of 1°C/minutes to 94 °C. During a total of 15 minutes of the temperature rise procedure, the temperature was raised by 15°C. The temperature was maintained at 94°C until the end of the final reaction.

### Simultaneous feeding stage

The simultaneous feeding process was started. The water glass water solution (modulus 2.6) was added at a flow rate of 68.8g/min. The flow rate of dilute sulfuric acid was 64g/min. The molar ratio of sulfuric acid to water glass was 1.055. The pH detection was carried out and the acid flow rate was adjusted so as to keep the pH of the slurry was stable at 8± 0.05. At this stage, the total addition amount of water glass and acid was 3984 g.

### Post-treatment stage

In the pH-dropping stage, a dilute sulfuric acid was introduced to reduce the pH to 4.5.

After curing for 10 minutes, the reaction slurry was filtered with a plate filter press and washed with soft water to obtain a filter cake of white carbon black (water content = 81%). A colloid mill was used to change the filter cake from the solid to a liquid slurry. The pH value of the slurry was adjusted to 6. A spray drying tower was used for drying to produce a finished product of white carbon black.

**Table 10**

| Preparat ion of white carbon black | Oxygen-deficient air (m³/h) | Rice hull amount (t/h) | Total oxygen-r ich air (air)(m³/ h) | Primary oxygen-r ich air | Seconda ry air | Carbon content | Total oxygen-r ich air/oxyg en-defici ent air (v:v) | Oxygen-deficient air/rice hull (m³/t) |
|---|---|---|---|---|---|---|---|---|
| Example 32 | 1716 | 1.92 | 12957 | 667 | 12290 | 10.5 | 7.6 | 775.9 |
| Example 33 | 1986 | 3 | 14989 | 662 | 14327 | 12.9 | 7.5 | 893.8 |
| Example 34 | 2978 | 5.08 | 18339 | 993 | 17346 | 12.3 | 6.2 | 662.0 |
| Example 35 | 2449 | 5.23 | 19487 | 816 | 18671 | 11.2 | 8.0 | 586.2 |
| Example 36 | 2250 | 2.9 | 11528 | 750 | 10778 | 12.2 | 5.1 | 468.3 |
| Example 37 | 2382 | 4.07 | 15334 | 265 | 15069 | 11.8 | 6.4 | 585.3 |

The above-mentioned method was used to detect the absorbance and the coumaric acid content of water glass, and the obtained white carbon black product was used to prepare rubber. The performance test results were as follows.

**Table 11**

| White carbon black | Absorbance of water glass | Content of coumaric acid in water glass | Tensile strength of rubber |
|---|---|---|---|
| Example 32 | 0.72 | 12.00 | 17.6 |
| Example 33 | 0.61 | 10.17 | 18.8 |
| Example 34 | 0.56 | 9.33 | 17.8 |
| Example 35 | 0.32 | 5.33 | 16.2 |
| Example 36 | 1.15 | 19.17 | 14.3 |
| Example 37 | 0.24 | 4.00 | 15.6 |

### Preparation Examples 38-41 Preparation of rice hull ash

The same batch of rice hull ash (2mm oversize content of 3.6%, the rice hull ash absorbance of 0.95, 4-coumaric acid content of 1.8335µg/g) was treated with a 2mm straight line sieve to give a 2 mm oversize (A) and a 2 mm undersize (B), which were reformulated according to the 2mm oversize proportion (weight ratio) in Table 12 below to obtain the rice hull ashes in Table 12 below.

**Table 12**

| Rice hull ash | 2mm oversize (A) | 2mm undersize (B) | 2mm oversize content of the rice hull ash |
|---|---|---|---|
| Preparation Example 38 | 86 | 9914 | 0.86% |
| Preparation Example 39 | 193 | 9807 | 1.93% |
| Preparation Example 40 | 14 | 9986 | 0.14% |
| Preparation Example 41 | 360 | 9640 | 3.6% |

### Preparation Examples 42-44 Preparation of rice hull ash

The same batch of rice hull ash (2mm oversize content of 3.6%, the rice hull ash absorbance of 0.95, 4-coumaric acid content of 1.8335µg/g) was treated with a 2mm straight line sieve to give a 2 mm undersize (B), which was mixed with the non-sieved rice hull ash according to the proportions in Table 13 below to obtain the corresponding rice hull ashes.

**Table 13**

| Rice hull ash | non-sieved rice hull ash raw material | 2 mm undersize (B) | 2mm oversize content of the rice hull ash |
|---|---|---|---|
| Preparation Example 42 | 118 | 1000 | 0.38% |
| Preparation Example 43 | 1250 | 1000 | 2.00% |
| Preparation Example 44 | 614 | 1000 | 1.37% |

### Preparation Examples 45 Preparation of rice hull ash

The same batch of rice hull ash (2mm oversize content of 3.6%, the rice hull ash absorbance of 0.95, 4-coumaric acid content of 1.8335µg/g) was treated with a 2mm straight line sieve to give a 2 mm oversize (A), which was further mixed according to the proportion in Table 14 below with the rice hull ash obtained by mixing according to Preparation Example 44 to obtain the corresponding rice hull ash.

**Table 14**

| Rice hull ash | Example 63 (g) | 2 mm oversize (A) (g) | 2mm oversize content of the rice hull ash |
|---|---|---|---|
| Preparation Example 45 | 1000 | 10 | 1.32% |

### Preparation Example 46-47

Rice hulls were obtained by cleaning and hulling of the same batch of rough rice, and the rice hulls were subjected to a winnowing step to obtain an oversize (A), an undersize (B) and an undersize (C), the specific winnowing step was as follows:
1) the distance between the blower fan and the rice hull was set to 40 cm, the air speed of the blower fan was adjusted to purge the rice hull raw material with a thickness of 1 cm at an air speed of 20 m³/min for 1 minute, and the purged rice hull was collected and recorded as an undersize (B);
2) the air speed of the blower fan was adjusted to continue the purging at an air speed of 7 m³/min until an oversize (A) free of the rice hull was obtained, and the purged rice hull was collected and recorded as an undersize (C);

According to the weight ratio in Table 15 below, the oversize (A), the undersize (C) and the undersize (B) were mixed, and the starch and protein contents in the resulting mixture were detected. The contents of the rice hull samples 46 and 47 were summarized in Table 15 below.

**Table 15**

| Rice hull sample | Oversize (A) | Undersize (C) | Undersize (B) | Starch | Protein | Oversize/ Total organic impurities |
|---|---|---|---|---|---|---|
| Sample 46 | 3.3 | 14.6 | 82.1 | 2.05 | 2.25 | 0.77 |
| Sample 47 | 3 | 6 | 91 | 1.5 | 2.21 | 0.81 |

The rice hulls of samples 46-47 were sent to the boiler furnace for combustion at a rate of 3 tons/hour under a positive pressure. The furnace combustion temperature was 800°C, and the fire grate rotation speed was adjusted to control the residence time of the rice hull in the furnace to 30 minutes, and the rice hull ashes of Preparation Examples 46-47 discharged from the tail of the fire grate was collected. The content of the 2 mm oversize and the water-boiled absorbance of the obtained rice hull ash were measured, and the results were recorded in Table 16 below:

**Table 16**

| Rice hull ash | Rice hull sample | Absorbance of rice hull ash | 2mm oversize content of the rice hull ash |
|---|---|---|---|
| Preparation Example 46 | Sample 46 | 0.76 | 1.7 |
| Preparation Example 47 | Sample 47 | 0.85 | 2.1 |

According to the above method, the absorbance and 4-coumaric acid content of rice hull ash were detected, and the results were as follows:

**Table 17**

| | 2mm oversize content of the rice hull ash | Absorbance of rice hull ash | 4-coumaric acid content in rice hull ash (µg/g) |
|---|---|---|---|
| Preparation Example 38 | 0.86% | 0.69 | 150.0 |
| Preparation Example 39 | 1.93% | 0.64 | 139.1 |
| Preparation Example 40 | 0.14% | 0.23 | 50.0 |
| Preparation Example 41 | 3.6% | 0.95 | 206.5 |
| Preparation Example 42 | 0.38% | 0.38 | 82.6 |
| Preparation Example 43 | 2.0% | 0.79 | 171.7 |
| Preparation Example 44 | 1.37% | 0.45 | 97.8 |
| Preparation Example 45 | 1.32% | 0.51 | 110.9 |
| Preparation Example 46 | 1.72% | 0.76 | 165.2 |
| Preparation Example 47 | 2.13% | 0.85 | 184.8 |

### Examples 38-47 Preparation of white carbon black (Method 2)

1) Preparation of water glass: each of rice hull ash samples (2000g) obtained in the above Preparation Examples 38-47, sodium hydroxide (904.3g) and water (9940g) were respectively weighed, and then added to the a high-pressure autoclave to proceed the reaction with a temperature rise. When the pressure rose to 3 kg, the timing was started. The reaction time was 4 hours. After the completion of the reaction, the pressure was released by cooling. The reaction slurry was filtered using a filter press. The filter cake was washed with 60°C water, and the specific gravity of the washing liquor was measured during the washing process. When the specific gravity of the washing liquor was 1.030, the washing was finished. The filtrate was collected and counted as concentrated water glass, and the washing liquor was collected and counted as diluted water glass.
2) the concentrated water glass and the diluted water glass obtained in the step 1) were added to a blending tank according to the proportion, and the prepared aqueous water glass solution had a specific gravity of 1.140 and was left for use.
3)
   Initial stage:
   Into the reactor equipped with an agitator and a steam heating device were introduced:
   5700g of the aqueous water glass solution (modulus 2.6), 2335g of an aqueous sodium sulfate solution (having a Na₂SO₄ concentration of 3.8 %), and 398g of soft water, wherein the substrate material had a SiO₂ concentration of 76g/L and a Na⁺ concentration of 1.09mol/L, and was heated to the temperature of 79°C.

### Acidification stage

An acid pump was turned on. A dilute sulfuric acid (specific gravity 1.050) was added into the reactor at a flow rate of 92.4 g/minutes. In the acidification stage, the pH was checked once every 5 minutes, and the turbidity of the reaction system was detected, so that the turbidity of the reaction system reached 60FAU at 23 minutes. The flow rate was kept until the pH=8. The total amount of the acid used in this stage was 4623g. The time for adding the acid is 50 minutes, during which when the turbidity reached 4000FAU, the temperature rise began and proceeded at a rate of 1°C/minutes to 94 °C. During a total of 15 minutes of the temperature rise procedure, the temperature was raised by 15°C. The temperature was maintained at 94°C until the end of the final reaction.

### Simultaneous feeding stage

The simultaneous feeding process was started. The water glass water solution (modulus 2.6) was added at a flow rate of 68.8g/min. The flow rate of dilute sulfuric acid was 64g/min. The molar ratio of sulfuric acid to water glass was 1.055. The pH detection was carried out and the acid flow rate was adjusted so as to keep the pH of the slurry was stable at 8± 0.05. At this stage, the total addition amount of water glass and acid was 3984 g.

### Post-treatment stage

In the pH-dropping stage, a dilute sulfuric acid was introduced to reduce the pH to 4.5.

After curing for 10 minutes, the reaction slurry was filtered with a plate filter press and washed with soft water to obtain a filter cake of white carbon black (water content = 81%). A colloid mill was used to change the filter cake from the solid to a liquid slurry. The pH value of the slurry was adjusted to 6. A spray drying tower was used for drying to produce a finished product of white carbon black.

The white carbon black of Examples 38-47 corresponded to the rice hull ashes of Preparation Examples 38-47, respectively. With the above method, the white carbon black was used to prepare the rubber, and the results were summarized below.

**Table 18**

| White carbon black | BET | CTAB | Water | pH | Sodium sulfate | Absorbance of water glass | Content of coumaric acid in water glass | Tensile strength (MPa) |
|---|---|---|---|---|---|---|---|---|
| Example 38 | 155 | 154 | 6.1 | 7 | 1.2 | 0.66 | 11.00 | 17.2 |
| Example 39 | 159 | 154 | 5.6 | 6.75 | 1 | 0.69 | 11.50 | 17.6 |
| Example 40 | 165 | 159 | 5.2 | 6.55 | 1.2 | 0.26 | 4.33 | 15.7 |
| Example 41 | 157 | 153 | 5.7 | 6.4 | 1.5 | 1.01 | 16.83 | 14.6 |
| Example 42 | 158 | 147 | 5.3 | 6.5 | 1.4 | 0.44 | 7.33 | 16.4 |
| Example 43 | 166 | 162 | 6.5 | 6.89 | 1.94 | 0.87 | 14.50 | 16.3 |
| Example 44 | 164 | 151 | 3.9 | 6.74 | 0.27 | 0.49 | 8.17 | 16.9 |
| Example 45 | 162 | 156 | 5.6 | 6.95 | 1.2 | 0.59 | 9.83 | 17.7 |
| Example 46 | 159 | 152 | 5.2 | 6.84 | 1.5 | 0.82 | 13.67 | 16.7 |
| Example 47 | 163 | 157 | 5.9 | 6.72 | 1.1 | 0.95 | 15.83 | 15.6 |

It could be seen from the above-mentioned examples, in order to obtain a white carbon black that meets the requirements of the present invention, the parameters for example the oversize/undersize ratio, the starch-based protein content, or the total organic impurity content of the rice hull and the rice hull ash can be adjusted. Or alternatively, the process parameters for preparing the rice hull ash is adjusted, so as to obtain the water glass meeting the requirements of the present invention, improve the white carbon black performance, and achieve the purpose of significantly improving the mechanical properties of the rubber derived from the biomass white carbon black.

## Claims

1. A method for preparing a white carbon black, comprising following steps:
d1) a substrate material containing an aqueous solution containing a silicate represented by a formula M₂O·nSiO₂ and an acid are contacted to give a slurry E;
d2) the slurry E obtained in the step d1) is subjected to a solid-liquid separation to give a solid-phase fraction, and the solid-phase fraction is dried to give a white carbon black product,
the aqueous solution containing the silicate represented by the formula M₂O·nSiO₂ with an absorbance of 0.2-0.7, preferably, the absorbance of the aqueous solution is 0.3-0.7; the absorbance is measured in a 1.0 cm cuvette,
M is selected from alkali metal elements K and Na;
n is 2-3.5;
a liquid fraction has a 4-coumaric acid content of 5-15 µg/mL.

2. The method for preparing a white carbon black as claimed in claim 1, the aqueous solution has one or more of following characteristics:
1) the absorbance of the aqueous solution is 0.4-0.7;
3) specific gravity of the aqueous solution is 1.000-1.280, such as 1.100-1.180;
4) the liquid fraction has a coumaric acid content of 5-15 µg/mL;and
6) the aqueous solution is obtained by mixing and reacting a rice hull ash and an inorganic alkali in water.

3. The method for preparing a white carbon black as claimed in claim 2, wherein a preparation method of the aqueous solution comprises following steps:
c1) a rice hull ash and an inorganic alkali are mixed in water and reacted to give a slurry C;
c2) the slurry C obtained in the above step c1) is subjected to a solid-liquid separation to give the aqueous solution containing the silicate represented by the formula M₂O·nSiO₂; or
in the step c2), the slurry C can be filtered to give a filtrate A as a liquid phase fraction and a filter cake D; or
at least a part of the obtained filtrate A and water are mixed to give the aqueous solution containing the silicate represented by the formula M₂O·nSiO₂; or
the obtained filter cake D is washed with water one or more times to give one or more parts of washing liquor(s) B, for example, it is washed with water at 40-80°C, e.g. 50-80°C, one or more times to give one or more parts of washing liquor(s) B; or
at least a part of the obtained filtrate A and at least a part of the washing liquor B are mixed to give the aqueous solution containing the silicate represented by the formula M₂O·nSiO₂.

4. The method for preparing a white carbon black as claimed in claim 3, wherein a weight percentage content of 2mm oversize in the rice hull ash is not more than 2.3 wt%, for example, not higher than 2 wt%, e.g., 0.5-2 wt%; or
an absorbance of an aqueous extract solution of the rice hull ash, at a wavelength of 300-330 nm, especially at a wavelength of 300 nm, may be 0.3-0.85, for example 0.4-0.8, e.g., 0.45-0.70; or
an aqueous extract solution of the rice hull ash is prepared under a condition that a mass-volume ratio (g:mL) of the rice hull ash to water is 1:5-30, preferably 1:8-20, e.g., 1:10-15; or
an aqueous extract solution of the rice hull ash is obtained by contacting the rice hull ash with water at 80-110°C; or
a contacting time may be, for example, 0.05-0.1 hours to obtain an extract solution of the rice hull ash; or
the rice hull ash has a 4-coumaric acid content of 60-175µg/g, preferably 80-150µg/g, more preferably 80-140µg/g.

5. The method for preparing a white carbon black as claimed in claim 3 or 4, wherein a method of preparing the rice hull ash comprises combustion of rice hull to give the rice hull ash, wherein the combustion of the rice hull is carried out at a controlled ratio of oxygen-rich air volume to oxygen-deficient air volume in unit time, and/or combustion of the rice hull is carried out at a controlled ratio of blown-in amount of oxygen-deficient air (m³) to mass of the rice hull (ton) inunit time; or
a controlled ratio of oxygen-rich air volume to oxygen-deficient air volume in unit time refers to adjusting a ratio of oxygen-rich air volume to oxygen-deficient air volume, for example, the ratio of oxygen-rich air volume to oxygen-deficient air volume in unit time is greater than 5.1:1, for example, 5.5:1 or more, e.g., 6:1-10:1 or 6:1-8:1; or
a controlled ratio of blown-in amount of oxygen-deficient air (m³) to mass of the rice hull (ton) in unit time, for example, the ratio of blown-in amount of oxygen-deficient air (m³) to mass of the rice hull (ton) in unit time is 600:1 or more, for example, 600:1-1000:1, e.g., 650:1-900:1; or
gas introduced into a boiler in unit time is divided into two types, a primary air and a secondary air; wherein the primary air includes an air for blowing a fuel and a blown oxygen-deficient air; and the secondary air can include a preheated hot air; or
an oxygen-rich air comprises an air for blowing a fuel in a primary air for introducing a boiler in unit time and all secondary air in unit time; or
an oxygen-deficient air undergoes a processes of purification and heat exchange before being blown into a boiler, for example, temperature of oxygen-deficient air can be 100-200°C; or
an oxygen content in oxygen-rich air may be 21 vol% - 25 vol%, and its example can be air; or
an oxygen content of oxygen-deficient air is lower than that of oxygen-rich air, for example, less than 10 vol%, e.g., less than 5 vol%, e.g., 3-5 vol%, and its example may be a tail gas after combustion of the rice hull; or
the rice hull ash can be prepared by following method:
b1) the rice hull is placed in a boiler combustion zone for combustion to obtain an initial rice hull ash;
b2) the initial rice hull ash obtained in the step b1) is subjected to sieving and impurity removal to give the rice hull ash; or
temperature in a boiler combustion zone can be, for example, 600-900°C, e.g., 600-800°C, 600-700°C; residence time of the rice hull in a furnace can be 10-60 minutes, e.g., 10-30 minutes, e.g., 15-20 minutes; or
the rice hull ash obtained by combustion of the rice hull is further sieved; the sieving can be performed through a straight-line sieve of 1-5 mm, preferably, 2 mm; or
the sieved rice hull ash also passes through a separator under a negative pressure conveying condition to separate organic substance impurities having different specific gravities through inertia; or
carbon content of the rice hull ash product can be 10-40 wt%, for example 15-30 wt%, e.g., 15-25 wt%.

6. The method for preparing a white carbon black as claimed in any of claims 3-5, wherein in the rice hull raw material for preparing the rice hull ash, a weight percentage content of the rice hull oversize is 0.3-3.3%; for example 1-3.3%; e.g., 1.5-2.5%; or
a mass ratio of an oversize in the rice hull to total organic impurities is 0.1-0.8:1, for example 0.3-0.8:1, e.g., 0.5-0.75:1; or
a weight percentage content of total organic impurities in the rice hull refers to the total of weight percentage contents of organic impurities in terms of starch and protein; or
a starch content in the rice hull is 0.2-3.0%, for example 0.4-2.3%; a protein content in the rice hull is 2.0-2.8%, for example 2.1-2.4%; or
a preparation method of the rice hull comprises following steps:
al) rice (e.g., wet rice) is sieved to remove impurities and then separated by a hulling machine to obtain the rice hull;
a2) the rice hull obtained in step a1) is winnowed out; or
the above preparation method also comprises, in the step a2), controlling a weight percentage content of an oversize in the rice hull product and/or a mass ratio of the oversize to total organic impurities,
the weight percentage content of the rice hull oversize is detected by the following method:
1) a 1.5mm test sieve and a sieve bottom are put in place, a sample spoon is used to take out 50g of a rice hull sample and place it on the 1.5mm sieve, wherein the thickness of the rice hull is 1 cm; the sieve lid is covered and the sieve is turned clockwise and counterclockwise for 60 seconds respectively;
2) the rice hull on the 1.5mm sieve is purged with a blower fan: an air speed of 20 m³/min is firstly used, wherein the distance between the air duct and the rice hull is 40 cm, the purging time is 1 minute, and the remaining rice hull thickness is 0.5cm, and then an air speed of 7 m³/min is used, wherein during the purging, the purged rice hull is checked until all the rice hulls are purged out of the sieve, wherein the weight of the oversize is weighed as m (g), and the oversize content is calculated: the impurity content of the oversize in the rice hull (weight %) = m (g) × 100% ÷ 50g.

## Patentansprüche

1. Verfahren zum Herstellen einer Fällungskieselsäure, umfassend die folgenden Schritte:
d1) ein Substratmaterial, das eine wässrige Lösung enthält, die ein durch eine Formel M₂O·nSiO₂ dargestelltes Silikat enthält, und eine Säure werden unter Erhalt einer Aufschlämmung E in Kontakt gebracht;
d2) die in Schritt d1) erhaltene Aufschlämmung E wird einer Fest-Flüssig-Trennung unter Erhalt einer Festphasenfraktion unterzogen und die Festphasenfraktion wird unter Erhalt eines Fällungskieselsäureprodukts getrocknet,
die wässrige Lösung, die das durch die Formel M₂O·nSiO₂ dargestellte Silikat enthält, mit einer Absorptionsfähigkeit von 0,2-0,7, bevorzugt beträgt die Absorptionsfähigkeit der wässrigen Lösung 0,3-0,7; die Absorptionsfähigkeit wird in einer 1,0-cm-Küvette gemessen,
M ist ausgewählt aus den Alkalimetallelementen K und Na;
n ist 2-3,5;
eine flüssige Fraktion weist einen 4-Coumarinsäure-Gehalt von 5-15 ug/ml auf.

2. Verfahren zum Herstellen einer Fällungskieselsäure nach Anspruch 1, wobei die wässrige Lösung eine oder mehrere der folgenden Eigenschaften aufweist:
1) die Absorptionsfähigkeit der wässrigen Lösung beträgt 0,4-0,7;
3) die relative Dichte der wässrigen Lösung beträgt 1,000-1,280, wie 1,100-1,180;
4) die flüssige Fraktion weist einen Coumarinsäure-Gehalt von 5-15 µg/ml auf; und
6) die wässrige Lösung wird durch Mischen und Umsetzen einer Reishülsenasche und eines anorganischen Alkali in Wasser erhalten.

3. Verfahren zum Herstellen einer Fällungskieselsäure nach Anspruch 2, wobei ein Herstellungsverfahren der wässrigen Lösung die folgenden Schritte umfasst:
c1) eine Reishülsenasche und ein anorganisches Alkali werden in Wasser gemischt und unter Erhalt einer Aufschlämmung C umgesetzt;
c2) die im vorstehenden Schritt c1) erhaltene Aufschlämmung C wird einer Fest-Flüssig-Trennung unter Erhalt der wässrigen Lösung unterzogen, die das durch die Formel M₂O·nSiO₂ dargestellte Silikat enthält; oder
in Schritt c2) kann die Aufschlämmung C unter Erhalt eines Filtrats A als Flüssigphasenfraktion und eines Filterkuchens D filtriert werden; oder
zumindest ein Teil des erhaltenen Filtrats A und Wasser werden unter Erhalt der wässrigen Lösung gemischt, die das durch die Formel M₂O·nSiO₂ dargestellte Silikat enthält; oder
der erhaltene Filterkuchen D wird mit Wasser ein- oder mehrmals unter Erhalt eines oder mehrerer Teile Waschlauge B gewaschen, beispielsweise wird er mit Wasser bei 40-80 °C, z. B. 50-80 °C, ein- oder mehrmals unter Erhalt eines oder mehrerer Teile Waschlauge B gewaschen;
oder
zumindest ein Teil des erhaltenen Filtrats A und zumindest ein Teil der Waschlauge B werden unter Erhalt der wässrigen Lösung gemischt, die das durch die Formel M₂O·nSiO₂ dargestellte Silikat enthält.

4. Verfahren zum Herstellen einer Fällungskieselsäure nach Anspruch 3, wobei ein Gewichtsprozentgehalt von 2 mm Übergröße in der Reishülsenasche nicht mehr als 2,3 Gew.-%, beispielsweise nicht über 2 Gew.-%, z. B. 0,5-2 Gew.-%, beträgt; oder
eine Absorptionsfähigkeit einer wässrigen Extraktlösung der Reishülsenasche bei einer Wellenlänge von 300-330 nm, insbesondere bei einer Wellenlänge von 300 nm, 0,3-0,85, zum Beispiel 0,4-0,8, z. B. 0,45-0,70, betragen kann; oder
eine wässrige Extraktlösung der Reishülsenasche, die unter einer Bedingung hergestellt wird, dass ein Masse-Volumen-Verhältnis (g:ml) der Reishülsenasche zu Wasser 1:5-30, bevorzugt 1:8-20, z. B. 1:10-15, beträgt; oder
eine wässrige Extraktlösung der Reishülsenasche durch Inkontaktbringen der Reishülsenasche mit Wasser bei 80-110 °C erhalten wird; oder
eine Dauer des Inkontaktbringens beispielsweise 0,05-0,1 Stunde betragen kann, um eine Extraktlösung der Reishülsenasche zu erhalten; oder
die Reishülsenasche einen 4-Coumarinsäure-Gehalt von 60-175µg/g, bevorzugt 80-150µg/g, besonders bevorzugt 80-140µg/g, aufweist.

5. Verfahren zum Herstellen einer Fällungskieselsäure nach Anspruch 3 oder 4, wobei ein Verfahren zum Herstellen der Reishülsenasche die Verbrennung von Reishülse unter Erhalt der Reishülsenasche umfasst, wobei die Verbrennung der Reishülse in einem kontrollierten Verhältnis von Volumen sauerstoffreicher Luft zu Volumen sauerstoffarmer Luft in Zeiteinheit ausgeführt wird und/oder die Verbrennung der Reishülse in einem kontrollierten Verhältnis von eingeblasener Menge an sauerstoffarm Luft (m³) zu Masse der Reishülse (Tonne) in Zeiteinheit ausgeführt wird; oder
sich ein kontrolliertes Verhältnis von Volumen sauerstoffreicher Luft zu Volumen sauerstoffarmer Luft in Zeiteinheit auf das Anpassen eines Verhältnisses von Volumen sauerstoffreicher Luft zu Volumen sauerstoffarmer Luft bezieht, das Verhältnis von Volumen sauerstoffreicher Luft zu Volumen sauerstoffarmer Luft in Zeiteinheit beispielsweise über 5,1:1 beispielsweise 5,5:1 oder mehr, z. B. 6:1-10:1 oder 6:1-8:1, beträgt; oder
ein kontrolliertes Verhältnis von eingeblasener Menge an sauerstoffarmer Luft (m³) zu Masse der Reishülse (Tonne) in Zeiteinheit, beispielsweise das Verhältnis von eingeblasener Menge an sauerstoffarmer Luft (m³) zu Masse der Reishülse (Tonne) in Zeiteinheit, 600:1 oder insbesondere 600:1-1000:1, z. B. 650:1-900:1, beträgt; oder
Gas, eingebracht in einen Kessel in Zeiteinheit, in zwei Typen unterteilt wird, eine primäre Luft und eine sekundäre Luft; wobei die primäre Luft eine Luft zum Blasen eines Kraftstoffs und einer geblasenen sauerstoffarmen Luft umfasst; und die sekundäre Luft eine vorerwärmte heiße Luft umfassen kann; oder
eine sauerstoffreiche Luft eine Luft zum Blasen eines Kraftstoffs in einer primären Luft zum Einbringen eines Kessels in Zeiteinheit und der gesamten sekundären Luft in Zeiteinheit umfasst; oder
eine sauerstoffarme Luft Prozesse der Reinigung und des Wärmeaustauschs durchläuft, bevor sie in einen Kessel geblasen wird, beispielsweise kann eine Temperatur sauerstoffarmer Luft 100-200 °C betragen; oder
ein Sauerstoffgehalt in sauerstoffreicher Luft 21 Vol.% - 25 Vol.% betragen kann, und ein Beispiel dafür kann Luft sein; oder
ein Sauerstoffgehalt von sauerstoffarmer Luft niedriger als jener von sauerstoffreicher Luft ist, beispielsweise niedriger als 10 Vol.%, z. B. niedriger als 5 Vol.%, z. B. 3-5 Vol.%, und ein Beispiel dafür kann ein Restgas nach Verbrennung der Reishülse sein; oder
die Reishülsenasche durch folgendes Verfahren hergestellt werden kann:
b1) die Reishülse in einer Kesselverbrennungszone zur Verbrennung unter Erhalt einer anfänglichen Reishülsenasche platziert werden kann;
b2) die in Schritt b1) erhaltene anfängliche Reishülsenasche einem Sieben und einer Entfernung von Verunreinigungen unter Erhalt der Reishülsenasche unterzogen wird; oder
die Temperatur in einer Kesselverbrennungszone beispielsweise 600-900 °C, z. B. 600-800 °C, 600-700 °C, betragen kann; die Verweildauer der Reishülse in einem Ofen 10-60 Minuten, z. B. 10-30 Minuten, z. B. 15-20 Minuten, betragen kann; oder
die durch die Verbrennung der Reishülse erhaltene Reishülsenasche ferner gesiebt wird; das Sieben durch ein geradliniges Sieb von 1-5 mm, bevorzugt 2 mm, durchgeführt werden kann; oder
die gesiebte Reishülsenasche auch durch einen Separator unter einer Unterdruck übertragenden Bedingung verläuft, um Verunreinigungen organischer Stoffe mit unterschiedlichen relativen Dichten durch Trägheit zu trennen; oder
Kohlenstoffgehalt des Reishülsenaschenprodukts 10-40 Gew.-%, zum Beispiel 15-30 Gew.-%, z. B. 15-25 Gew.-%, betragen kann.

6. Verfahren zum Herstellen einer Fällungskieselsäure nach einem der Ansprüche 3-5, wobei in dem Reishülsenrohmaterial zum Herstellen der Reishülsenasche ein Gewichtsprozentgehalt der Reishülsenübergröße 0,3-3,3 %; zum Beispiel 1-3,3 %; z. B. 1,5-2,5 %, beträgt; oder
ein Massenverhältnis einer Übergröße in der Reishülse zur Gesamtheit der organischen Verunreinigungen 0,1-0,8:1, zum Beispiel 0,3-0,8:1, z. B. 0,5-0,75:1, beträgt; oder ein Gewichtsprozentgehalt der Gesamtheit organischer Verunreinigungen in der Reishülse sich auf die Gesamtheit der Gewichtsprozentgehalte organischer Verunreinigungen hinsichtlich Stärke und Protein bezieht; oder
ein Stärkegehalt in der Reishülse 0,2-3,0 %, zum Beispiel 0,4-2,3 %, beträgt; ein Proteingehalt in der Reishülse 2,0-2,8 %, zum Beispiel 2,1-2,4 %, beträgt; oder
ein Herstellungsverfahren für die Reishülse folgende Schritte umfasst:
a1) Reis (z. B. nasser Reis) wird gesiebt, um Verunreinigungen zu entfernen, und dann durch eine Schälmaschine unter Erhalt der Reishülse getrennt;
a2) die in Schritt a1) erhaltene Reishülse wird aussortiert; oder
das vorstehende Herstellungsverfahren umfasst in Schritt a2) auch das Kontrollieren eines Gewichtsprozentgehalts einer Übergröße in dem Reishülsenprodukt und/oder eines Massenverhältnisses der Übergröße zur Gesamtheit organischer Verunreinigungen,
der Gewichtsprozentgehalt der Reishülsenübergröße wird durch das folgende Verfahren nachgewiesen:
1) ein 1,5-mm-Testsieb und ein Siebboden werden zurechtgelegt, ein Probenlöffel wird verwendet, um 50 g einer Reishülsenprobe zu entnehmen und sie auf dem 1,5-mm-Sieb zu platzieren, wobei die Dicke der Reishülse 1 cm beträgt; der Siebdeckel bedeckt ist und das Sieb im bzw. gegen den Uhrzeigersinn 60 Sekunden lang gedreht wird;
2) die Reishülse auf dem 1,5-mm-Sieb mit einem Gebläse gespült wird: zuerst eine Luftgeschwindigkeit von 20 m³/min verwendet wird, wobei der Abstand zwischen dem Luftkanal und der Reishülse 40 cm beträgt, die Spüldauer 1 Minute beträgt und die Dicke der verbleibenden Reishülse 0,5 cm beträgt, und dann eine Luftgeschwindigkeit von 7 m³/min verwendet wird, wobei während des Spülens die gespülte Reishülse überprüft wird, bis sämtliche Reishülsen aus dem Sieb gespült sind, wobei das Gewicht der Übergröße als m (g) gewogen wird und der Übergrößengehalt wie folgt berechnet wird: der Verunreinigungsgehalt der Übergröße in der Reishülle (Gew.-%) = m (g) × 100% ÷ 50g.

## Revendications

1. Procédé de préparation d'un noir de carbone blanc, comprenant les étapes suivantes :
d1) un matériau de substrat contenant une solution aqueuse contenant un silicate représenté par la formule M₂O·nSiO₂ et un acide sont mis en contact pour donner une suspension E ;
d2) la suspension E obtenue à l'étape d1) est soumise à une séparation solide-liquide pour donner une fraction en phase solide, et la fraction en phase solide est séchée pour donner un produit de noir de carbone blanc,
la solution aqueuse contenant le silicate représenté par la formule M₂O·nSiO₂ avec une absorbance de 0,2 à 0,7, de préférence, l'absorbance de la solution aqueuse est de 0,3 à 0,7 ; l'absorbance est mesurée dans une cuvette de 1,0 cm,
M est choisi parmi les éléments de métaux alcalins K et Na ;
n est de 2 à 3,5 ;
une fraction liquide a une teneur en acide 4-coumarique de 5-15 µg/mL.

2. Procédé de préparation d'un noir de carbone blanc selon la revendication 1, dans lequel la solution aqueuse présente une ou plusieurs des caractéristiques suivantes
1) l'absorbance de la solution aqueuse est de 0,4-0,7 ;
3) la gravité spécifique de la solution aqueuse est de 1,000-1,280, telle que 1,100-1,180 ;
4) la fraction liquide a une teneur en acide coumarique de 5-15 µg/mL ; et
6) la solution aqueuse est obtenue par mélange et mise en réaction d'une cendre de balle de riz et d'un alcali inorganique dans l'eau.

3. Procédé de préparation d'un noir de carbone blanc selon la revendication 2, dans lequel un procédé de préparation de la solution aqueuse comprend les étapes suivantes :
c1) une cendre de balle de riz et un alcali inorganique sont mélangés dans de l'eau et mis à réagir pour donner une suspension C ;
c2) la suspension C obtenue à l'étape c1) ci-dessus est soumise à une séparation solide-liquide pour donner la solution aqueuse contenant le silicate représenté par la formule M₂O·nSiO₂ ; ou
dans l'étape c2), la suspension C peut être filtrée pour donner un filtrat A en tant que fraction de phase liquide et un gâteau de filtration D ; ou
au moins une partie du filtrat A obtenu et de l'eau sont mélangées pour donner la solution aqueuse contenant le silicate représenté par la formule M₂O·nSiO₂ ; ou
le gâteau de filtration D obtenu est lavé avec de l'eau une ou plusieurs fois pour obtenir une ou plusieurs parties de liqueur (s) de lavage B, par exemple, il est lavé avec de l'eau à une température de 40-80 °C, par exemple 50-80 °C, une ou plusieurs fois pour obtenir une ou plusieurs parties de liqueur(s) de lavage B ; ou
au moins une partie du filtrat A obtenu et au moins une partie de la liqueur de lavage B sont mélangées pour donner la solution aqueuse contenant le silicate représenté par la formule M₂O·nSiO₂.

4. Procédé de préparation d'un noir de carbone blanc selon la revendication 3, dans lequel une teneur en pourcentage pondéral de 2 mm de surdimensionnement dans la cendre de balle de riz n'est pas supérieure à 2,3 % en poids, par exemple, n'est pas supérieure à 2 % en poids, par exemple, 0.5-2 % en poids ; ou
une absorbance d'une solution aqueuse d'extrait de la cendre de balle de riz, à une longueur d'onde de 300-330 nm, en particulier à une longueur d'onde de 300 nm, peut être de 0,3 à 0,85, par exemple 0,4 à 0,8, par exemple 0,45 à 0,70 ; ou
une solution aqueuse d'extrait de la cendre de balle de riz est préparée dans des conditions telles qu'un rapport masse/volume (g:mL) de la cendre de balle de riz sur l'eau soit de 1:5-30, de préférence 1:8-20, par exemple 1:10-15 ; ou
une solution aqueuse d'extrait de la cendre de balle de riz est obtenue en mettant en contact la cendre de balle de riz avec de l'eau à 80-110 °C ; ou
le temps de contact peut être, par exemple, de 0,05 à 0,1 heure pour obtenir une solution d'extrait de la cendre de balle de riz ; ou
la cendre de balle de riz a une teneur en acide 4-coumarique de 60 à 175 µg/g, de préférence de 80 à 150 µg/g, de préférence encore de 80 à 140 µg/g.

5. Procédé de préparation d'un noir de carbone blanc selon la revendication 3 ou 4, dans lequel un procédé de préparation de la cendre de balle de riz comprend la combustion de balle de riz pour donner la cendre de balle de riz, dans lequel la combustion de la balle de riz est effectuée selon un rapport régulé du volume d'air riche en oxygène sur volume d'air pauvre en oxygène dans l'unité de temps, et/ou la combustion de la balle de riz est effectuée selon un rapport régulé de la quantité insufflée d'air pauvre en oxygène (m³) sur la masse de la balle de riz (tonne) dans l'unité de temps ; ou
un rapport régulé du volume d'air riche en oxygène sur le volume d'air pauvre en oxygène dans l'unité de temps se rapporte à l'ajustement d'un rapport du volume d'air riche en oxygène sur le volume d'air pauvre en oxygène, par exemple, le rapport du volume d'air riche en oxygène sur le volume d'air pauvre en oxygène dans l'unité de temps est supérieur à 5,1:1, par exemple, 5,5:1 ou plus, par exemple, 6:1-10:1 ou 6:1-8:1 ; ou
un rapport régulé de la quantité insufflée d'air pauvre en oxygène (m³) sur la masse de la balle de riz (tonne) dans l'unité de temps, par exemple, le rapport de la quantité insufflée d'air pauvre en oxygène (m³) sur la masse de la balle de riz (tonne) dans l'unité de temps est de 600:1 ou plus, par exemple, 600:1-1 000:1, par exemple, 650:1-900:1 ; ou
du gaz introduit dans une chaudière dans l'unité de temps est divisé en deux types, un air primaire et un air secondaire ; l'air primaire comprenant un air pour souffler un combustible et un air soufflé pauvre en oxygène ; et l'air secondaire pouvant comprendre un air chaud préchauffé ; ou
un air riche en oxygène comprend un air pour souffler un combustible dans un air primaire pour introduire une chaudière dans l'unité de temps et tout l'air secondaire dans l'unité de temps ; ou
un air pauvre en oxygène subit un processus de purification et d'échange de chaleur avant d'être soufflé dans une chaudière, par exemple, la température de l'air pauvre en oxygène peut être 100 à 200 °C ; ou
une teneur en oxygène dans l'air riche en oxygène peut être de 21 % en volume à 25 % en volume, et son exemple peut être l'air ; ou
une teneur en oxygène de l'air pauvre en oxygène est inférieure à celle de l'air riche en oxygène, par exemple, inférieure à 10 % en volume, par exemple, inférieure à 5 % en volume, par exemple, 3-5 % en volume, et son exemple peut être un gaz de queue après combustion de la balle de riz ; ou
la cendre de balle de riz peut être préparée par le procédé suivant :
b1) la balle de riz est placée dans une zone de combustion de chaudière pour la combustion afin d'obtenir une cendre de balle de riz initiale ;
b2) la cendre de balle de riz initiale obtenue à l'étape b1) est soumise à un tamisage et à une élimination d'impuretés pour obtenir la cendre de balle de riz ; ou
la température dans une zone de combustion de chaudière peut être, par exemple, 600-900 °C, par exemple, 600-800 °C, 600-700 °C ; le temps de séjour de la balle de riz dans un four peut être 10-60 minutes, par exemple 10-30 minutes, par exemple 15-20 minutes ; ou
la cendre de balle de riz obtenue par combustion de la balle de riz est ensuite tamisée ; le tamisage peut être effectué à travers un tamis rectiligne de 1-5 mm, de préférence de 2 mm ; ou
la cendre de balle de riz tamisée passe également à travers un séparateur dans des conditions de transport sous pression négative pour séparer par inertie des impuretés de substances organiques ayant des gravités spécifiques différentes ; ou
la teneur en carbone du produit de cendre de balle de riz peut être de 10-40 % en poids, par exemple de 15-30 % en poids, par exemple de 15-25 % en poids.

6. Procédé de préparation d'un noir de carbone blanc selon l'une quelconque des revendications 3 à 5, dans lequel, dans la matière première de balle de riz pour préparer la cendre de balle de riz, une teneur en pourcentage pondéral du surdimensionnement de balle de riz est de 0,3 à 3,3 % ; par exemple de 1 à 3,3 % ; par exemple de 1,5 à 2,5 % ; ou
un rapport massique d'un surdimensionnement dans la balle de riz sur les impuretés organiques totales est de 0,1-0,8:1, par exemple de 0,3-0,8:1, par exemple de 0,5-0,75:1 ; ou
une teneur en pourcentage pondéral d'impuretés organiques totales dans la balle de riz se réfère au total des teneurs en pourcentage pondéral des impuretés organiques en termes d'amidon et de protéines ; ou
une teneur en amidon dans la balle de riz est de 0,2 à 3,0 %, par exemple de 0,4 à 2,3 % ; une teneur en protéines dans la balle de riz est de 2,0 à 2,8 %, par exemple de 2,1 à 2,4 % ; ou
un procédé de préparation de la balle de riz comprend les étapes suivantes :
a1) du riz (par exemple, du riz humide) est tamisé pour éliminer des impuretés, puis séparé par une machine à décortiquer pour obtenir la balle de riz ;
a2) la balle de riz obtenue à l'étape a1) est vannée ; ou
le procédé de préparation ci-dessus comprend également, à l'étape a2), la régulation d'une teneur en pourcentage pondéral d'un surdimensionnement dans le produit de balle de riz et/ou d'un rapport massique du surdimensionnement sur les impuretés organiques totales,
la teneur en pourcentage pondéral du surdimensionnement de la balle de riz est détectée par le procédé suivant :
1) un tamis d'essai de 1,5 mm et un fond de tamis sont mis en place, une cuillère d'échantillon est utilisée pour retirer 50 g d'un échantillon de balle de riz et le placer sur le tamis de 1,5 mm, dans lequel l'épaisseur de la balle de riz est de 1 cm ; le couvercle du tamis est couvert et le tamis est tourné dans le sens horaire et antihoraire pendant 60 secondes respectivement ;
2) la balle de riz sur le tamis de 1,5 mm est purgée avec un ventilateur de soufflerie : une vitesse d'air de 20 m³/min est d'abord utilisée, dans lequel la distance entre le conduit d'air et la balle de riz est de 40 cm, le temps de purge est de 1 minute et l'épaisseur de balle de riz restante est de 0,5 cm, ensuite, une vitesse d'air de 7 m³/min est utilisée, pendant la purge, la balle de riz purgée étant vérifiée jusqu'à ce que toutes les balles de riz soient purgées hors du tamis, le poids du surdimensionnement étant pesé en m (g), et la teneur en surdimensionnement étant calculée : la teneur en impuretés du surdimensionnement dans la balle de riz (% en poids) = m (g) x 100 % ÷ 50 g.
